# FASCICULE DE BREVET EUROPEEN

(11) **EP 4 118 019 B1**
(45) Date de publication et mention de la délivrance du brevet: **07.02.2024**
(21) Numéro de dépôt: 21704586.3
(22) Date de dépôt: 17.02.2021
(51) Int. Cl.: B65G 69/00

(54) **DISPOSITIF DE BLOCAGE D'UN VEHICULE ROUTIER DEVANT UN EMPLACEMENT DE CHARGEMENT-DECHARGEMENT**
VORRICHTUNG ZUM BLOCKIEREN EINES STRASSENFAHRZEUGS VOR EINER BE-/ENTLADESTELLE
DEVICE FOR BLOCKING A ROAD VEHICLE IN FRONT OF A LOADING/UNLOADING POINT

(30) Priorité: 09.03.2020 FR 2002321
(43) Date de publication de la demande: 18.01.2023
(73) Titulaire: Securidock, 29290 Milizac-Guipronvel (FR)
(72) Inventeur: JEZEQUEL, Gilbert, 29290 MILIZAC-GUIPRONVEL (FR)
(74) Mandataire: Vidon Brevets & Stratégie
(86) Numéro de dépôt international: PCT/EP2021/053840
(87) Numéro de publication internationale: WO 2021/180437

(56) Documents cités:
- EP-A1- 3 028 966
- WO-A1-2017/200475
- FR-A1- 3 035 387
- US-A1- 2009 194 376
- US-A1- 2011 162 916

## Description

### Domaine technique de l'invention

La présente invention concerne un dispositif de blocage d'un véhicule, tel qu'un camion, véhicule utilitaire ou semi-remorque.

### Art antérieur

Il est connu de multiples dispositifs qui assurent le calage des roues de véhicules, en particulier des camions.

De tels dispositifs sont utilisés pour immobiliser un camion pendant le chargement ou le déchargement de celui-ci, de sorte à sécuriser le transfert de marchandises et à assurer la sécurité du personnel manutentionnaire.

On connaît notamment des systèmes de calage dans lesquels une ou plusieurs roues du camion sont calées par une cale latérale. D'une manière générale, ces systèmes connus mettent en oeuvre un chariot mobile sur une piste de guidage, le déplacement du chariot sur le rail étant facilité par des galets de roulement. Le document EP 3028966 A1 décrit un tel système de calage, comprenant entre autre les caractéristiques techniques du préambule de la revendication 1.

Dès que le camion est positionné par rapport à la station de chargement-déchargement, le chariot mobile est positionné en vis-à-vis de la roue à bloquer (roue arrière, par exemple) et un moyen de blocage appelé cale est poussé et/ou déplacé pour retenir ainsi la roue du camion et empêcher son départ ou son roulement. Ainsi, la cale peut être placée dans une position dite d'arrêt, dans laquelle elle assure la fonction de calage et est maintenue dans cette position, et une position de non-utilisation, dans laquelle elle ne s'oppose plus au mouvement du camion et n'assure donc plus la fonction de calage.

Le passage d'une position à l'autre peut se faire de manière automatisée, par exemple par l'intermédiaire d'un actionneur tel qu'un vérin, ou de manière manuelle, soit directement par un opérateur (le chauffeur en l'occurrence) se saisissant de la cale et la déplaçant, soit indirectement par exemple par l'intermédiaire d'un levier manuel.

De tels systèmes de calage sont relativement complexes en raison du nombre de pièces qui sont mises en oeuvre.

Le déplacement du chariot qui est relativement lourd est en outre fastidieux pour un opérateur malgré la présence de galets de roulement.

Son verrouillage en positon devant une roue à bloquer nécessite bien souvent plusieurs essais successifs.

Par ailleurs, le maintien de la cale en position d'arrêt nécessite des manipulations successives d'ajustement qui prennent du temps.

En outre, les systèmes actuels ne sont pas réversibles en ce sens qu'ils sont configurés pour être installés soit du côté droit, soit du côté gauche d'un quai de transbordement.

Enfin, lorsque l'élément de calage subit de la part de la roue une sollicitation dans la position de blocage (une cale placée contre la roue d'un camion à l'arrêt vide peut se retrouver coincée par le pneu du même camion chargé, et donc difficile voire impossible à déplacer de la position d'arrêt à la position de non-utilisation), une contrainte forte peut s'exercer sur les galets de roulement du chariot. Ces derniers doivent donc être dimensionnés de sorte à pouvoir absorber cette contrainte, ce qui nuit à la compacité et au poids du système.

### Présentation de l'invention

Le but de l'invention est de fournir un dispositif de blocage d'utilisation générale simple et remédiant aux inconvénients évoqués ci-dessus.

Pour ce faire, l'invention propose un dispositif d'immobilisation ou de blocage d'un véhicule routier devant un emplacement de chargement et/ou de déchargement, comprenant une structure fixe comportant un rail de guidage et un chariot mobile en translation sur ledit rail, ledit chariot comprenant des galets de roulement aptes à rouler sur une surface de roulement du rail de guidage, des moyens de manoeuvre dudit chariot par rapport audit rail, des moyens d'immobilisation d'au moins une roue dudit véhicule comprenant un élément de blocage du véhicule solidaire du chariot et mobile entre une position de blocage dans laquelle l'élément de blocage assure le blocage de la roue et une position rétractée à l'écart de la roue,

Selon l'invention, les galets de roulement sont montés de façon mobile sur le chariot de sorte que lorsque l'élément de blocage subit de la part de la roue une sollicitation supérieure à une valeur prédéterminée dans la position de blocage, les galets sont escamotés dans le chariot et le chariot vient en contact avec le rail de guidage de façon à provoquer le coincement du chariot sur le rail de guidage.

L'invention propose ainsi un dispositif d'immobilisation ou de blocage d'un véhicule routier devant un quai de chargement, comprenant une structure fixe comportant un rail de guidage et un chariot mobile monté sur le rail et comprenant des galets de roulement aptes à rouler sur une surface de roulement du rail de guidage. Lorsque l'élément de calage subit de la part de la roue une sollicitation dans la position de blocage (ceci peut survenir lorsque la camion, positionné vide, est chargé), les galets sont escamotés de façon à provoquer le coincement du chariot sur le rail de guidage. De la sorte, les galets ne subissent pas de contraintes trop importantes qui risqueraient de dégrader ces derniers. Des galets de faible diamètre peuvent ainsi être utilisés dans le dispositif ce qui réduit sensiblement l'encombrement et le poids de ce dernier sans nuire au déplacement du chariot sur le rail de guidage.

Selon un aspect particulier de l'invention, les galets de roulement sont montés sur au moins un axe de rotation mobile disposé dans le chariot, au moins un ressort de placage des galets sur ladite surface de roulement du rail de guidage prenant appui sur ledit au moins un axe de rotation.

Les galets sont ainsi répartis sur un ou plusieurs axes montés sur ressorts. La technique d'escamotage des galets est relativement simple et peu couteuse à mettre en oeuvre.

Selon un aspect particulier de l'invention, lorsque la contrainte sur l'élément de blocage est inférieure à ladite valeur prédéterminée, le chariot est espacé du rail de guidage permettant ainsi son déplacement et est uniquement en contact avec ce dernier par le biais des galets de roulement.

Du fait du faible poids du chariot et de la mise en oeuvre de galets de roulement, le déplacement du chariot sur le rail de guidage ne nécessite que peu d'efforts.

Selon un aspect particulier de l'invention, le dispositif comprend des moyens de verrouillage dudit chariot sur ledit rail de guidage comprenant une crémaillère montée sur le rail de guidage et présentant une série de creux et un doigt de verrouillage disposé sur l'élément de calage et destiné à coopérer avec un desdits creux de la crémaillère en position de verrouillage dudit chariot sur ledit rail de guidage.

Cette solution de verrouillage du chariot par un pion dans une crémaillère évite à l'opérateur de procéder par essais successifs comme dans les solutions de l'art antérieur et permet d'avoir un verrouillage continu.

Selon un aspect particulier de l'invention, les creux de la crémaillère sont séparés par dents de forme triangulaire.

Cette forme des dents assure un guidage efficace du doigt de verrouillage de l'élément de calage vers le fond d'un des creux de la crémaillère.

Selon un aspect particulier de l'invention, le dispositif comprend des moyens d'entraînement pour assurer le déplacement dudit élément de calage par rapport au rail de guidage entre sa position de repos et sa position de calage et vice versa, comprenant une poignée de manoeuvre et une bielle articulée reliant ladite poignée audit élément de calage.

Une simple action sur la poignée de manoeuvre permet le déplacement de la cale dans un sens ou dans l'autre. Cette solution offre une ergonomie améliorée.

Avantageusement, le diamètre extérieur des galets de roulement est compris entre 40 et 50mm. Il est, par exemple, égal à 45mm.

L'invention concerne également une station de chargement-déchargement dotée d'au moins un dispositif tel que décrit précédemment.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****fig. 1****] :** la figure 1 est une vue en perspective partielle d'un dispositif d'immobilisation d'un véhicule routier conforme à l'invention ;
**[****fig. 2****] :** la Figure 2 est une vue de côté du dispositif d'immobilisation de la figure 1 montrant la cale d'immobilisation d'un véhicule dans sa position rétractée ou escamotée ;
**[****fig. 3****] :** la Figure 3 est une vue de côté du dispositif d'immobilisation de la figure 1 montrant la cale d'immobilisation d'un véhicule dans sa position déployée ou active ;
**[****fig. 4****] :** la Figure 4 est une vue partielle de dessus du dispositif de l'invention montrant le mécanisme de verrouillage du chariot sur le rail de guidage ;
**[****fig. 5****]** : la Figure 5 est une vue partielle de dessous du dispositif de l'invention montrant le mécanisme de verrouillage du chariot sur le rail de guidage ;
**[****fig. 6****]** : la Figure 6 est une vue partielle de détail du dispositif de l'invention montrant le mécanisme de verrouillage du chariot sur le rail de guidage ;
**[****fig. 7A****]** : la Figure 7A est une vue en coupe de face montrant le chariot se déplaçant par le biais de galets de roulement sur le rail de guidage ;
**[****fig. 7B****]** : la Figure 7B est une vue en coupe, en perspective, montrant le chariot se déplaçant par le biais de galets de roulement sur le rail de guidage ;
**[****fig. 8A****]** : la Figure 8A est une vue en coupe de face montrant les galets de roulement du chariot dans leur position escamotée ;
**[****fig. 8B** **]** : la Figure 8B est une vue en coupe, en perspective, montrant les galets de roulement du chariot dans leur position escamotée.

### Description détaillée de l'invention

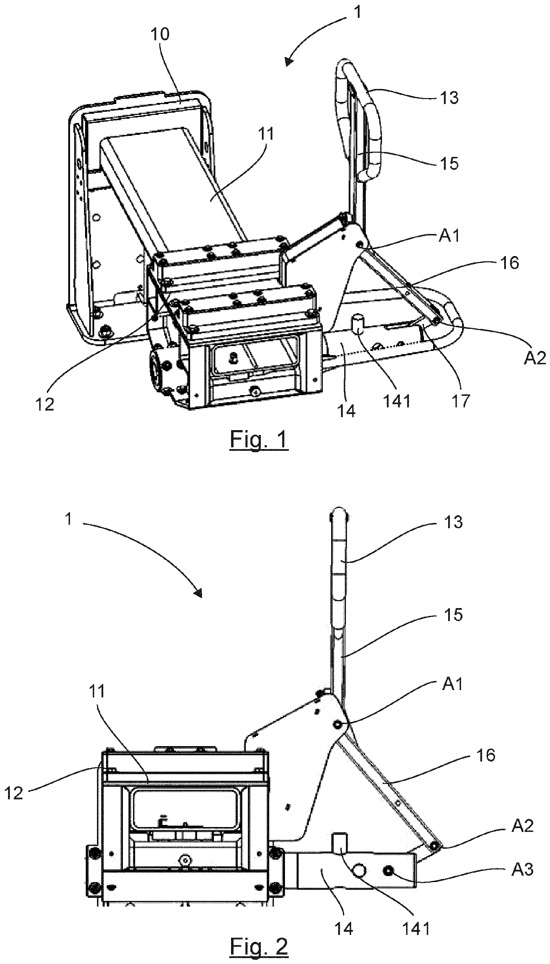

La figure 1 est une vue partielle d'un dispositif d'immobilisation 1 d'un véhicule routier tel qu'un semi- remorque devant un quai de chargement-déchargement (non représenté) d'un centre de distribution, par exemple.

Le dispositif d'immobilisation 1 selon l'invention est particulièrement destiné à sécuriser le transfert de marchandises en immobilisant les véhicules accostant au quai de chargement-déchargement.

Le dispositif d'immobilisation 1 comprend deux flasques 10 de fixation au sol et un rail de guidage, ou glissière, 11 positionné et fixé entre les flasques 10. Un chariot 12 est monté coulissant en translation sur le rail de guidage 11. Le rail de guidage 11 présente une section rectangulaire creuse. Une poignée d'actionnement ou de manoeuvre 13 permet de déplacer le chariot 12 le long du rail de guidage 11 pour positionner un élément de calage, ou cale, 14 manuelle en face d'une des roues d'un véhicule. La poignée 13 permet de commander, par ailleurs, le déplacement de la cale 14 perpendiculairement au rail de guidage 11. La cale 14 est ici de forme cylindrique.

En position de repos ou position rétractée de la cale 14 (figures 1 et 2), cette poignée d'actionnement 13 s'étend verticalement.

Lorsqu'un camion est garé en marche arrière le long du rail de guidage 11 pour le chargement et le déchargement, le chauffeur déplace le chariot 12 le long du rail de guidage 11 à l'aide de la poignée d'actionnement 13 en face d'une des roues d'un véhicule. Le chauffeur ajuste alors le chariot 12 dans la position souhaitée sur le rail de guidage 11 puis déploie la cale 14 de sorte à ce qu'elle se positionne devant la bande de roulement de ladite roue.

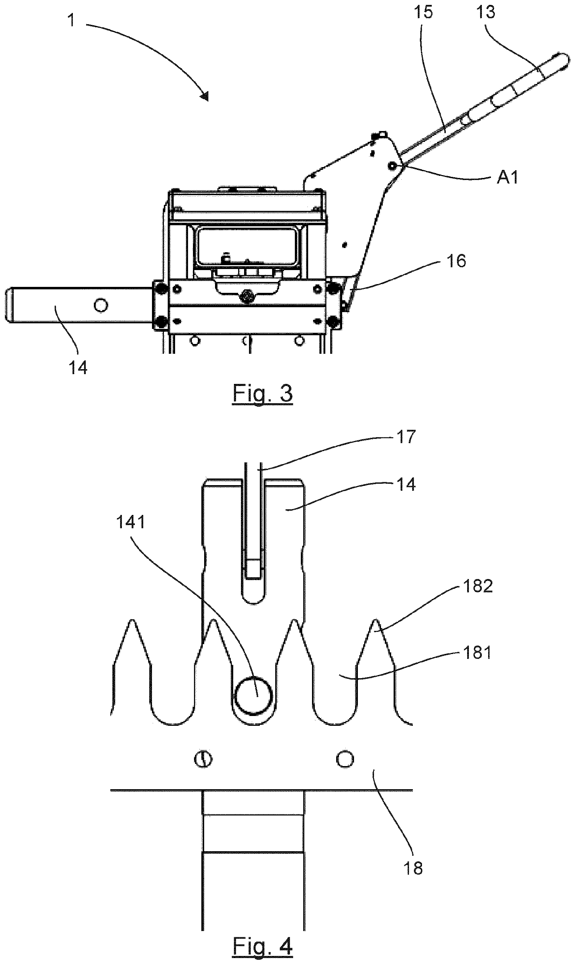

Pour ce faire, l'opérateur doit déplacer la poignée d'actionnement 13 vers le bas en la tirant vers lui pour déplacer transversalement la cale 14 en position devant la roue/pneu du véhicule à immobiliser (figure 2 et figure 3). La poignée d'actionnement 13 est reliée à une extrémité de la cale 14 par une bielle 16 pivotante de sorte à pouvoir commander le déplacement en translation de la cale 14.

Les moyens d'entraînement pour assurer le déplacement de la cale 14 par rapport au rail de guidage 11 entre sa position de repos et sa position de calage et vice versa, comprennent la poignée d'actionnement 13 et la bielle 16 pivotante reliant ladite poignée d'actionnement 13 à une extrémité de ladite cale 14.

Une tige 15 portant la poignée d'actionnement 13 et la bielle 16 sont articulées sur le chariot 12 autour d'un axe de rotation A1. Une tige 17 est montée pivotante sur la bielle 16 autour d'un axe de rotation A2 située à l'extrémité de la bielle 16. La tige 17 est également montée pivotante sur la cale 14 à son autre extrémité autour d'un axe de rotation A3.

Le mouvement de la poignée d'actionnement 13 est ainsi transmis à la cale 14 par le biais de trois pivots A1, A2, A3.

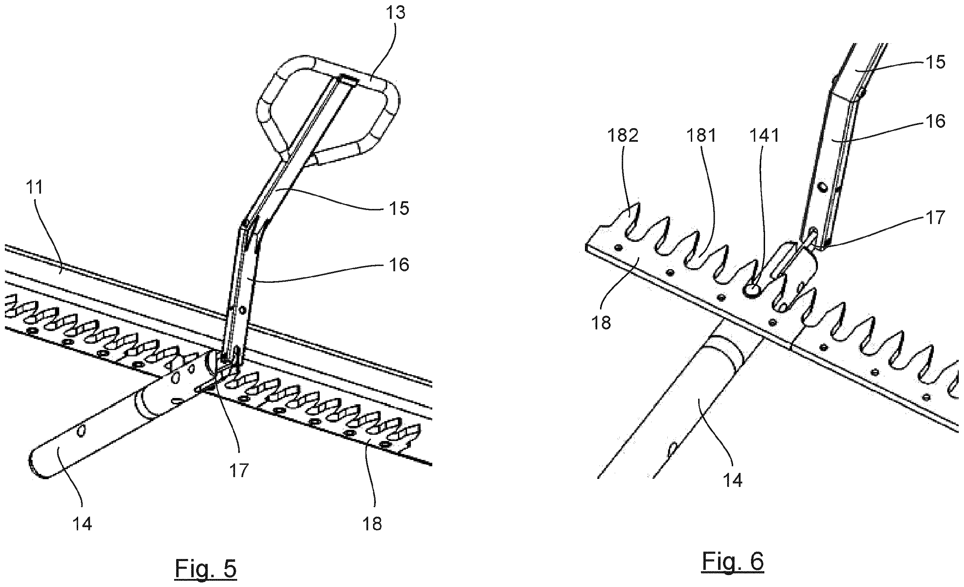

Comme illustré sur les figures 4, 5 et 6, une crémaillère 18 s'étend en-dessous du rail de guidage 11 selon l'axe longitudinal de ce dernier. Cette crémaillère 18 présente une série de dents 182 séparées par des creux 181. Un pion ou doigt de verrouillage 141 disposé sur le dessus de la cale 14 est destiné à être guidé par la forme des dents 182 dans un des creux 181. Ainsi, lorsque l'opérateur déplace la poignée d'actionnement 13 vers le bas pour déplacer transversalement la cale 14 en position déployée devant la roue/pneu du véhicule à immobiliser, le pion de verrouillage 141 vient se loger dans un des creux 181 verrouillant ainsi le chariot 12 sur le rail de guidage 11 (figures 3 à 6). Le chariot 12 peut ainsi être positionné de façon sélective dans plusieurs positions le long du rail de guidage 11 de façon à empêcher le mouvement du chariot 12. Le verrouillage du chariot 12 est aisé et ne nécessite pas plusieurs essais successifs comme avec les solutions de l'art antérieur, la forme triangulaire des dents assurant un guidage efficace du pion de verrouillage 141 dans un des creux 181.

Le dispositif d'immobilisation 1 comprend de préférence un feu de signalisation bicolore (non représenté) permet d'indiquer la position de la cale 14 et si le transfert de marchandises est possible. Le feu rouge indique que la semi-remorque est immobilisée (roue bloquée), et le feu vert indique que la semi-remorque est libérée (roue non bloquée).

Lorsque l'opération de transbordement est terminée, le feu bicolore passe au vert et l'opérateur peut désengager ou déverrouiller la cale 14 en repoussant la poignée d'actionnement 13 vers le haut ce qui libère le mécanisme de verrouillage. Le semi- remorque est libéré et peut alors s'éloigner du quai de chargement-déchargement.

Dans la position de blocage, le moyen de blocage (c'est-à-dire la cale 14 mobile) qui est prévu sur le chariot 12 guidé par le rail de guidage 11, vient en prise sur une roue arrière du véhicule.

Plusieurs galets de roulement 121 escamotables (quatre dans cet exemple) sont disposés dans la partie supérieure du chariot 12. Plus précisément, deux paires de galets de roulement 121 sont chacun montés sur un axe de rotation 123 s'étendant perpendiculairement à l'axe longitudinal du rail de guidage 11.

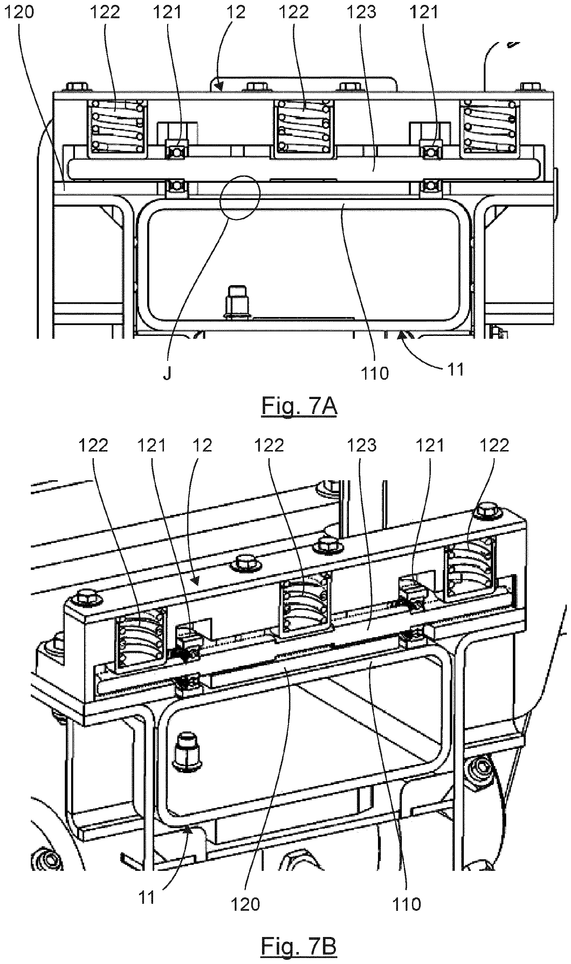

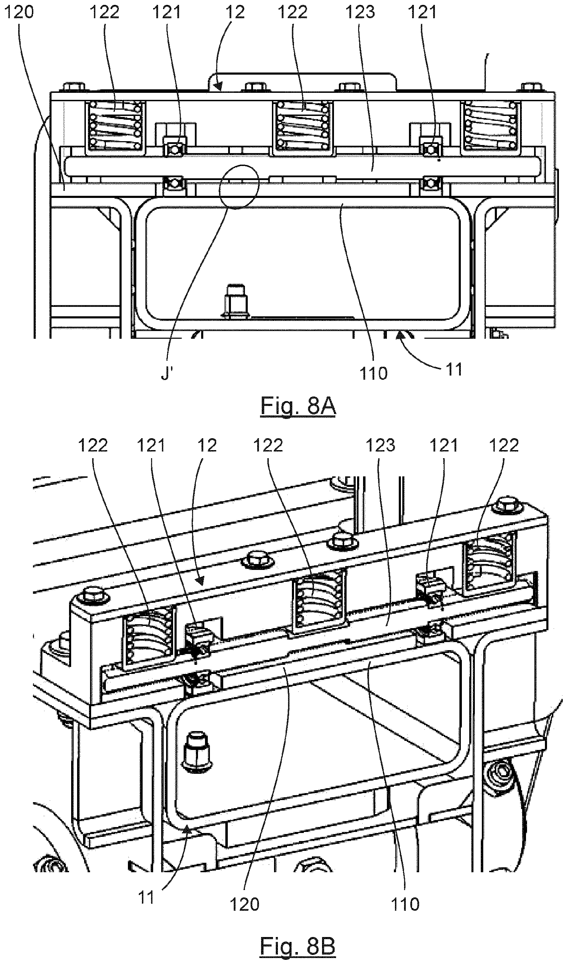

Par souci de clarté, seul un axe de rotation 123 est illustré sur les figures 7A, 7B, 8A et 8B.

L'axe de rotation 123 est séparé de la paroi supérieure du chariot 12 par plusieurs ressorts 122 (ici trois ressorts) répartis le long de l'axe de rotation 123 et qui prennent appui sur ce dernier. Les galets de roulement 121 se déplacent sur une surface de roulement du rail de guidage 11 correspondant à la paroi supérieure 110 du rail de guidage 11 et sont maintenus en contact avec la surface de roulement sous l'effet des ressorts 122. Ils permettent de minimiser l'effort de manipulation du chariot 12. L'axe de rotation 123 et les galets de roulement 121 sont montés mobiles verticalement dans l'espace intérieur du chariot 12.

On comprend que chacun des axes est monté sur ressort.

En position de roulement des galets de roulement 121, un espace, ou jeu, J est défini entre la paroi inférieure 120 du chariot 12 et la paroi supérieure 110 du rail de guidage 11 (figure 7A). L'axe de rotation 123 est lui en contact avec la paroi inférieure 120 du chariot 12.

Dans la position de blocage d'une roue d'un véhicule, lorsque la cale 14 est déployée et subit de la part de la roue une sollicitation dont la valeur est supérieure à une valeur prédéterminée (la cale placée devant et à l'écart de la roue d'un camion à l'arrêt vide peut se retrouver coincée par le pneu du même camion chargé), les galets de roulement 121 sont escamotés de façon à provoquer le coincement du chariot 12 sur le rail de guidage 11. Plus précisément, sous l'effet de cette contrainte, le chariot 12 et sa paroi inférieure 120 se déplacent verticalement vers le bas jusqu'à ce que la paroi inférieure 120 du chariot 12 vienne s'appliquer contre la paroi supérieure 110 du rail de guidage 11 créant un coincement s'opposant à tout déplacement du chariot 12 le long du rail de guidage 11. Les galets de roulement 121 restent en contact avec la paroi supérieure 110 du rail de guidage 11 sous l'effet des ressorts 122 et un jeu J' apparaît entre l'axe de rotation 123 et la paroi inférieure 120 du chariot 12.

De la sorte, les galets de roulement 121 ne subissent pas de contraintes trop importantes qui risqueraient de dégrader ces derniers. Des galets de faible diamètre peuvent ainsi être utilisés dans le dispositif de l'invention ce qui réduit sensiblement l'encombrement et le poids de ce dernier sans nuire au déplacement du chariot 12 sur le rail de guidage 11. Le diamètre extérieur des galets de roulement est ainsi compris entre 40 et 50mm.

Le nombre de galets de roulement n'est pas limité à quatre, mais peut être inférieur ou supérieur à ce chiffre. De la même façon, le nombre d'axes portant les galets et le nombre de ressorts est susceptible de varier.

En outre, le dispositif de l'invention est réversible en ce sens qu'il est configuré pour être installé soit du côté droit, soit du côté gauche d'un quai de transbordement, sans qu'il soit nécessaire d'y apporter des modifications structurelles.

## Revendications

1. Dispositif d'immobilisation ou de blocage (1) d'un véhicule routier devant un emplacement de chargement-déchargement, comprenant une structure fixe comportant un rail de guidage (11) et un chariot (12) mobile en translation sur ledit rail de guidage (11), ledit chariot (12) comprenant des galets de roulement (121) aptes à rouler sur une surface de roulement du rail de guidage (11), des moyens de manoeuvre dudit chariot (12) par rapport audit rail de guidage (11), des moyens d'immobilisation d'au moins une roue dudit véhicule comprenant un élément de blocage (14) du véhicule solidaire du chariot (12) et mobile entre une position de blocage dans laquelle l'élément de blocage (14) assure le blocage de la roue et une position rétractée à l'écart de la roue, **caractérisé en ce que** les galets de roulement (121) sont montés de façon mobile sur le chariot (12) de sorte que lorsque l'élément de blocage (14) subit de la part de la roue une sollicitation supérieure à une valeur prédéterminée dans la position de blocage, les galets de roulement (121) sont escamotés dans le chariot (12) et le chariot (12) vient en contact avec le rail de guidage (11) de façon à provoquer le coincement du chariot (12) sur le rail de guidage (11).

2. Dispositif selon la revendication 1, **caractérisé en ce que** les galets de roulement (121) sont montés sur au moins un axe de rotation (123) mobile disposé dans le chariot (12), au moins un ressort (122) de placage des galets de roulement (121) sur ladite surface de roulement du rail de guidage (11) prenant appui sur ledit au moins un axe de rotation (123).

3. Dispositif selon la revendication 1 ou 2, **caractérisé en ce que** lorsque la contrainte sur l'élément de blocage (14) est inférieure à ladite valeur prédéterminée, le chariot (12) est espacé du rail de guidage (11) permettant ainsi son déplacement et est uniquement en contact avec ce dernier par le biais des galets de roulement (121).

4. Dispositif selon l'une des revendications précédentes, **caractérisé en ce qu'**il comprend des moyens de verrouillage dudit chariot (12) sur ledit rail de guidage (11) comprenant une crémaillère (18) montée sur le rail de guidage (11) et présentant une série de creux (181) et un doigt de verrouillage (141) disposé sur l'élément de calage (14) et destiné à coopérer avec un desdits creux (181) de la crémaillère (18) en position de verrouillage dudit chariot (12) sur ledit rail de guidage (11).

5. Dispositif selon la revendication 4, **caractérisé en ce que** les creux (181) de la crémaillère (18) sont séparés par dents (182) de forme triangulaire.

6. Dispositif selon l'une des revendications précédentes, **caractérisé en ce qu'**il comprend des moyens d'entraînement pour assurer le déplacement dudit élément de calage (14) par rapport au rail de guidage (11) entre sa position de repos et sa position de calage et vice versa, comprenant une poignée de manoeuvre (13) et une bielle articulée (16) reliant ladite poignée de manoeuvre (13) audit élément de calage (14).

7. Dispositif selon l'une des revendications précédentes, caractérisé en ce le diamètre extérieur des galets de roulement (121) est compris entre 40 et 50mm.

8. Station de chargement-déchargement dotée d'au moins un dispositif selon l'une des revendications précédentes.

## Patentansprüche

1. Vorrichtung zum Immobilisieren oder Blockieren (1) eines Straßenfahrzeugs vor einer Belade-Entladestelle, umfassend eine feststehende Struktur, die eine Führungsschiene (11) und einen auf der Führungsschiene (11) vorschubbeweglichen Schlitten beinhaltet, wobei der Schlitten (12) Lagerrollen (121) umfasst, die imstande sind, auf einer Rollfläche der Führungsschiene (11) zu rollen, Mittel zum Betätigen des Schlittens (12) in Bezug auf die Führungsschiene (11) Mittel zum Immobilisieren mindestens eines Rades des Fahrzeug, die ein Blockierelement (14) des Fahrzeugs umfassen, das fest mit dem Schlitten (12) verbunden, und zwischen einer Blockierposition, in der das Blockierelement (14) für die Blockierung des Rades sorgt, und einer eingezogenen Position, abseits von dem Rad, beweglich ist,
**dadurch gekennzeichnet, dass** die Lagerrollen (121) beweglich am Schlitten (12) angebracht sind, sodass, wenn das Blockierelement (14) von Seiten des Rades eine Beanspruchung erfährt, die größer als ein vorbestimmter Wert in der Blockierposition ist, die Lagerrollen (121) im Schlitten (12) versenkt werden, und der Schlitten (12) in Kontakt mit der Führungsschiene (11) kommt, um ein Verklemmen des Schlittens (12) auf der Führungsschiene (11) zu bewirken.

2. Vorrichtung nach Anspruch 1, **dadurch gekennzeichnet, dass** die Lagerrollen (121) an mindestens einer beweglichen Drehachse (123) angebracht sind, die in dem Schlitten (12) angeordnet ist, wobei sich mindestens eine Feder (122) zum Anpressen der Lagerrollen (121) an die Rollfläche der Führungsschiene (11) an der mindestens einen Drehachse (123) anlegt.

3. Vorrichtung nach Anspruch 1 oder 2, **dadurch gekennzeichnet, dass**, wenn der Druck auf das Blockierelement (14) geringer als der vorbestimmte Wert ist, der Schlitten (12) von der Führungsschiene (11) beabstandet ist, wodurch dessen Verschiebung ermöglicht wird, und er mit dieser Letzteren nur über die Lagerrollen (121) in Kontakt steht.

4. Vorrichtung nach einem der vorstehenden Ansprüche, **dadurch gekennzeichnet, dass** sie Mittel zum Verriegeln des Schlittens (12) an der Führungsschiene (11) umfasst, die eine Zahnstange (18) umfassen, die auf der Führungsschiene (11) angebracht ist, und eine Reihe von Vertiefungen (181) und einen Verriegelungsstift (141) aufweist, der auf dem Verkeilungselement (14) angeordnet ist, und dazu bestimmt ist, mit einer der Vertiefungen (181) der Zahnstange (18) in einer Verriegelungsposition des Schlittens (12) an der Führungsschiene (11) zusammenzuwirken.

5. Vorrichtung nach Anspruch 4, **dadurch gekennzeichnet, dass** die Vertiefungen (181) der Zahnstange (18) durch Zähne (182) in Dreiecksform getrennt sind.

6. Vorrichtung nach einem der vorstehenden Ansprüche, **dadurch gekennzeichnet, dass** sie Antriebsmittel umfasst, um für die Verschiebung des Verkeilungselements (14) in Bezug auf die Führungsschiene (11) zwischen seiner Ruheposition und seiner Verkeilungsposition und umgekehrt zu sorgen, umfassend einen Betätigungsgriff (13) und eine gelenkige Schwinge (16), die den Betätigungsgriff (13) mit dem Verkeilungselement (14) verbindet.

7. Vorrichtung nach einem der vorstehenden Ansprüche, **dadurch gekennzeichnet, dass** der Außendurchmesser der Lagerrollen (121) zwischen 40 und 50 mm liegt.

8. Belade-Entladestation, die mit mindestens einer Vorrichtung nach einem der vorstehenden Ansprüche versehen ist.

## Claims

1. Device (1) for immobilizing or blocking a road vehicle in front of a loading/unloading location, comprising a fixed structure comprising a guide rail (11) and a carriage (12) that can be moved in translation on said guide rail (11), said carriage (12) comprising rollers (121) that are suitable for rolling on a rolling surface of the guide rail (11), means for manoeuvring said carriage (12) in relation to said guide rail (11), means for immobilizing at least one wheel of said vehicle comprising a blocking element (14) of the vehicle, which is secured to the carriage (12) and can be moved between a blocking position in which the blocking element (14) blocks the wheel, and a retracted position away from the wheel,
**characterised in that** the rollers (121) are movably mounted on the carriage (12) such that when the blocking element (14) is subjected by the wheel to a stress greater than a predetermined value in the blocking position, the rollers (121) are retracted into the carriage (12) and the carriage (12) comes into contact with the guide rail (11) so as to cause the carriage (12) to be immobilized on the guide rail (11).

2. Device according to claim 1, **characterised in that** the rollers (121) are mounted onto at least one axis of rotation (123) provided in the carriage (12), at least one spring (122) pressing the rollers (121) against said roller surface of the guide rail (11) being supported on said at least one axis of rotation (123).

3. Device according to claim 1 or 2, **characterised in that** when the stress on the blocking element (14) is below said predetermined value, the carriage (12) is spaced away from the guide rail (11) thus enabling it to be moved, and is only in contact with it via the rollers (121).

4. Device according to one of the previous claims, **characterised in that** it comprises means of blocking said carriage (12) onto said guide rail (11), comprising a rack (18) mounted on the guide rail (11) and presenting a series of troughs (181) and a blocking pin (141) provided on the blocking element (14) and designed to cooperate with one of said troughs (181) of the rack (18) in a position blocking said carriage (12) onto said guide rail (11).

5. Device according to claim 4, **characterised in that** the troughs (181) of the rack (18) are separated by teeth (182) of a triangular form.

6. Device according to one of the previous claims, **characterised in that** it comprises drive means to move said blocking element (14) in relation to the guide rail (11) between its resting position and its blocking position and vice versa, comprising a manoeuvring handle (13) and an articulated rod (16) connecting said manoeuvring handle (13) to the blocking element (14).

7. Device according to one of the previous claims, **characterised in that** the external diameter of the rollers (121) is between 40 and 50 mm.

8. Loading/unloading station endowed with at least one device according to one of the previous claims.
